# FASCICULE DE BREVET EUROPEEN

(11) **EP 0 488 833 B1**
(45) Date de publication et mention de la délivrance du brevet: **11.08.1993**
(21) Numéro de dépôt: 91402807.1
(22) Date de dépôt: 22.10.1991
(51) Int. Cl.: B60T 8/48, B60T 7/12, B60T 8/36

(54) **Dispositif de freinage automatique pour véhicule**
Automatische Bremsvorrichtung für Fahrzeuge
Automatic braking device for vehicles

(30) Priorité: 29.11.1990 FR 9014923
(43) Date de publication de la demande: 03.06.1992
(73) Titulaire: ALLIEDSIGNAL EUROPE SERVICES TECHNIQUES, 93700 Drancy (FR)
(72) Inventeur: Lebret, Pierre, Bendix Europe Services Techniques, F-93700 Drancy (FR); Kervagoret, Gilbert, Bendix Europe Services Tech., F-93700 Drancy (FR)
(74) Mandataire: Bentz, Jean-Paul

(56) Documents cités:
- EP-A- 0 230 213
- EP-A- 0 347 274
- EP-A- 0 353 125
- DE-A- 1 555 615
- DE-A- 2 064 562
- GB-A- 2 119 883

## Description

La présente invention concerne un dispositif de freinage automatique pour véhicule, comprenant :
- un circuit utilisateur incluant au moins un moteur de frein ;
- un maître-cylindre ;
- une pompe susceptible de délivrer sous pression élevée un fluide prélevé à un circuit d'alimentation incluant le maître-cylindre ;
- un circuit fluidique reliant le maître-cylindre et la pompe au circuit utilisateur ;
- un clapet anti-retour interposé entre la pompe et le circuit utilisateur ; et
- une électrovalve interposée au moins entre ledit maître-cylindre et ladite pompe.

Des dispositifs de freinage automatique, permettant notamment d'éviter un patinage des roues motrices sont bien connus dans l'art antérieur et un exemple en est donné dans le document EP-A-0 347 274.

Les dispositifs connus de ce type sont conçus en partant de l'hypothèse que le freinage automatique, lorsqu'il apparaît, se substitut au freinage commandé par le conducteur du véhicule.

En réalité, diverses circonstances peuvent affecter le bien-fondé de cette hypothèse et le but de la présente invention est de proposer un dispositif du type précité, structurellement simple et fonctiorinellement capable de réagir à une action de freinage commandé par le conducteur du véhicule.

A cette fin, le dispositif de l'invention est essentiellement caractérisé en ce que l'électrovalve est de type proportionnel, comporte un premier tiroir de régulation propre à contrôler l'ouverture d'un orifice de régulation reliant le circuit utilisateur au maître-cylindre, et est aussi interposée entre le circuit d'alimentation et la pompe pour réguler la pression du circuit utilisateur par rapport à la pression du circuit d'alimentation, et en ce que ce dispositif comporte un second tiroir de régulation de pression dans le circuit d'alimentation entre le maître-cylindre et l'électrovalve et susceptible de se déplacer sous l'effet d'une variation de pression dans le maître-cylindre, dans un sens propre à limiter la variation de pression qui en résulte dans le circuit d'alimentation.

Un tel dispositif trouve plusieurs applications que l'homme du métier pourra aisément combiner. Par exemple, il peut être utilisé dans un véhicule pourvu d'un système d'anti-blocage des roues pour commander automatiquement un freinage en réponse à un signal émis par une balise ou par un radar détectant un obstacle. Il peut également être utilise pour freiner,automatiquement les roues motrices lors de la détection d'un patinage notamment à l'accélération.

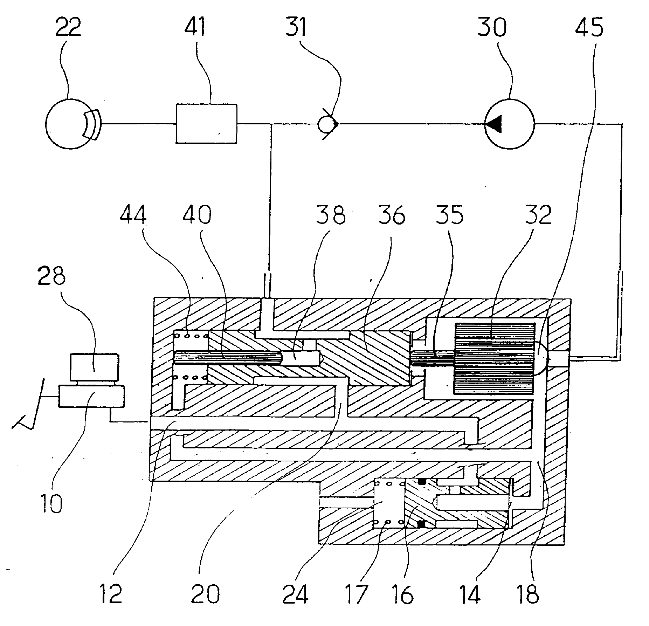

L'invention sera mieux comprise et d'autres buts, avantages et caractéristiques de celle-ci apparaîtront plus clairement à la lecture de la description qui suit d'un mode de réalisation donné à titre non limitatif et à laquelle est jointe une planche de dessin sur laquelle :
- La Figure Unique représente schématiquement en coupe un dispositif de freinage automatique selon l'invention.

En référence maintenant à cette Figure Unique, on reconnaîtra en 10 un maître cylindre connecté à un conduit 12. Ce conduit 12 est ouvert sur un tiroir de régulation 16 rappelé au repos par un ressort 17 de manière à laisser une communication ouverte entre ce conduit 12 et une chambre 14 ménagée d'un côté du tiroir 16 et un conduit 18 faisant partie du circuit d'alimentation de la pompe 30. La chambre 24 ménagée de l'autre côté du tiroir de régulation 16 reçoit la pression atmosphérique. Lorsque ce tiroir de comparaison 16 se déplace sous l'effet de la différence entre les pressions régnant dans les chambres 14 et 24, il régule la pression du fluide dans le conduit 18 du circuit d'aspiration de la pompe.

De façon connue, la pompe 30 est susceptible d'alimenter en fluide sous pression élevée le moteur de frein 22 par l'intermédiaire d'un clapet anti-retour 31. L'entrée d'alimentation de la pompe 30 est reliée au réservoir 28 par l'intermédiaire des conduits 12 et 18 et du maître-cylindre 10. Ce conduit 18 est également en communication avec les deux extrémités du tiroir 36 de l'électrovalve de manière à déterminer une pression de référence pour l'électrovalve proportionnelle.

L'électrovalve comprend un noyau 32 soumis à un champ magnétique destiné à mouvoir par l'intermédiaire d'une tige de poussée 35 un tiroir 36 rappelé au repos par un ressort 44. Une aiguille 40 immobile par rapport au corps de l'ensemble pénètre dans un alésage ménagé dans ce tiroir 36 de manière à déterminer une chambre de réaction 38. Cette dernière chambre 38 est en permanence en communication avec le circuit utilisateur comprenant le dispositif d'anti-blocage 41 et le moteur de frein 22.

Le noyau 32 comporte un clapet 45 pour fermer la communication entre le conduit 18 et le conduit d'alimentation de la pompe 30 en mode de fonctionnement non-automatique. Un tel clapet 45 n'est nécessaire que si le dispositif d'anti-blocage 41 met en oeuvre la même pompe 30. Dans ce cas, le conduit d'alimentation de la pompe est également connecté, par l'intermédiaire d'un clapet anti-retour, à un réservoir basse pression (non représenté sur la Figure).

En freinage normal, la pression générée par le maître cylindre se retrouve donc dans le moteur de frein 22 puisque le tiroir 36 reste en position de repos et que l'électrovalve n'est pas excitée. En cas d'imminence d'un blocage de roue, le dispositif d'anti-blocage 41 fonctionne de manière habituelle.

Maintenant en fonctionnement automatique, c'est-à-dire en réponse à un ordre extérieur, aucune pression n'étant générée par le maître cylindre 10, la pompe 30 et l'électrovalve sont activées simultanément. La communication entre l'entrée d'alimentation de la pompe et le réservoir 28 est assurée par le clapet 45 alors ouvert et par le tiroir de régulation 16. Le fluide aspiré par la pompe 30 reste donc à basse pression dans le conduit 18. L'orifice de régulation de l'électrovalve est en communication avec le réservoir 28 par l'intermédiaire du maître cylindre 10, ce qui permet à l'électrovalve de réguler de façon contrôlée la pression dans le moteur de frein 22. Le dispositif d'anti-blocage des roues 41 reste en service de manière à éviter tout blocage intempestif des roues.

Si le conducteur pendant ce temps de freinage automatique désire freiner son véhicule, une pression est générée dans le maître cylindre 10. Le tiroir de régulation 16 fait alors son office en régulant la pression du fluide aspiré par la pompe 30 par le conduit 18 à une valeur relativement basse fonction essentiellement de la raideur du ressort 17 et de la section hydraulique active du tiroir 16.

Pour tenter de réguler la pression selon la consigne reçue, l'orifice 20 s'ouvre alors davantage. C'est alors la pression engendrée par le maître cylindre 10 qui est appliquée au moteur de frein 22.

Ce dispositif permet donc bien d'assurer en toute sécurité les fonctions mentionnées ci-avant. Notamment, il présente l'avantage, par rapport à beaucoup de dispositifs connus, de permettre un freinage du véhicule en période d'anti-patinage, si le fonctionnement en mode automatique est prévu pour éviter le patinage des roues motrices et un passage progressif et sans à-coups de pression entre le mode de fonctionnement automatique et le mode de fonctionnement manuel.

On comprendra que l'homme du métier pourra aisément apporter des modifications à ce dispositif sans sortir du cadre de l'invention tel que défini par les revendications annexées.

## Revendications

1. Dispositif de freinage automatique pour véhicule, comprenant :
- un circuit utilisateur incluant au moins un moteur de frein (22) ;
- un maître-cylindre (10) ;
- une pompe (30) susceptible de délivrer sous pression élevée un fluide prélevé à un circuit d'alimentation incluant le maître-cylindre (10) ;
- un circuit fluidique reliant le maître-cylindre et la pompe au circuit utilisateur ;
- un clapet anti-retour (31) interposé entre la pompe et le circuit utilisateur ; et
- une électrovalve interposée au moint entre ledit maître-cylindre et ladite pompe,
caractérisé en ce que l'électrovalve est de type proportionnel, comporte un premier tiroir de régulation (36) propre à contrôler l'ouverture d'un orifice de régulation (20) reliant le circuit utilisateur au maître-cylindre, et est aussi interposée entre le circuit d'alimentation et la pompe (30) pour réguler la pression du circuit utilisateur par rapport à la pression du circuit d'alimentation, et en ce que ce dispositif comporte un second tiroir de régulation de pression (16) dans le circuit d'alimentation entre le maître-cylindre et l'électrovalve et susceptible de se déplacer sous l'effet d'une variation de pression dans le maître-cylindre, dans un sens propre à limiter la variation de pression qui en résulte dans le circuit d'alimentation.

2. Dispositif selon la revendication 1 caractérisé en ce que la pompe et l'électrovalve sont commandées simultanément.

3. Dispositif selon la revendication 1 ou 2, caractérisé en ce qu'une chambre de réaction (38) est ménagée à l'intérieur dudit premier tiroir de régulation (36), en ce que cette chambre est en permanence reliée audit circuit utilisateur et en ce que la pression du circuit d'alimentation est appliquée de part et d'autre de ce premier tiroir de régulation.

## Patentansprüche

1. Einrichtung zur automatischen Bremsung für Fahrzeuge, mit:
- einem Nutzanwendungskreis, der wenigstens einen Bremszylinder (22) enthält;
- einem Hauptzylinder ( 10);
- einer Pumpe (30), die dazu geeignet ist, ein mit hohem Druck beaufschlagtes Fluid zu liefern, das von einem den Hauptzylinder (10) enthaltenden Versorgungskreis entnommen wird;
- einem Fluidikkreis, der den Hauptzylinder und die Pumpe mit dem Nutzanwendungskreis verbindet;
- einem Rückschlagventil (31 ), das zwischen die Pumpe und den Nutzanwendungskreis eingesetzt ist; und
- einem Elektroventil, das wenigstens zwischen den Hauptzylinder und die Pumpe eingesetzt ist,
dadurch gekennzeichnet, daß das Elektroventil vom Proportionaltyp ist, einen ersten Steuerschieber (36) umfaßt, der den Öffnungsgrad einer Steueröffnung (20) steuern kann, die den Nutzanwendungskreis mit dem Hauptzylinder verbindet, und der ebenfalls zwischen den Versorgungskreis und die Pumpe (30) eingesetzt ist, um den Druck des Nutzanwendungskreises in bezug auf den Druck des Versorgungskreises zu steuern, und daß diese Einrichtung im Versorgungskreis zwischen dem Hauptzylinder und dem Elektroventil einen zweiten Drucksteuerschieber (16) aufweist, der sich unter der Wirkung einer Druckschwankung im Hauptzylinder in einem Richtungssinn verschieben kann, derart, daß die Druckschwankung, die sich daraus im Versorgungskreis ergibt, begrenzt wird.

2. Einrichtung gemäß Anspruch 1, dadurch gekennzeichnet, daß die Pumpe und das Elektroventil gleichzeitig gesteuert werden.

3. Einrichtung gemäß Anspruch 1 oder 2, dadurch gekennzeichnet, daß im Inneren des ersten Steuerschiebers (36) eine Reaktionskammer (38) ausgebildet ist, daß diese Kammer ständig mit dem Nutzanwendungskreis verbunden ist und daß der Druck des Versorgungskreises auf beiden Seiten dieses ersten Steuerschiebers angelegt wird.

## Claims

1. Automatic braking device for a vehicle, comprising:
- a consumer circuit incorporating at least one brake motor (22);
- a master cylinder (10);
- a pump (30) capable of delivering under high pressure a fluid taken from a feed circuit incorporating the master cylinder (10);
- a fluidic circuit linking the master cylinder and the pump to the consumer circuit;
- a non-return valve (31) interposed between the pump and the consumer circuit; and
- a solenoid valve interposed at least between the said master cylinder and the said pump,
characterised in that the solenoid valve is of the proportional type, includes a first regulating slide (36) able to control the opening of a regulating orifice (20) linking the consumer circuit to the master cylinder, and is also interposed between the feed circuit and the pump (30) in order to regulate the pressure of the consumer circuit with respect to the pressure of the feed circuit, and in that this device includes a second pressure-regulating slide (16) in the feed circuit between the master cylinder and the solenoid valve and capable of moving under the effect of a pressure variation in the master cylinder, in a direction able to limit the pressure variation resulting therefrom in the feed circuit.

2. Device according to Claim 1, characterised in that the pump and the solenoid valve are controlled simultaneously.

3. Device according to Claim 1 or 2, characterised in that a reaction chamber (38) is made inside the said first regulating slide (36), in that this chamber is permanently linked to the said consumer circuit and in that the pressure of the feed circuit is applied on either side of this first regulating slide.
